# EUROPÄISCHE PATENTSCHRIFT

(11) **EP 2 969 090 B1**
(45) Veröffentlichungstag und Bekanntmachung des Hinweises auf die Patenterteilung: **21.12.2016**
(21) Anmeldenummer: 14708267.1
(22) Anmeldetag: 06.03.2014
(51) Int. Cl.: B01D 3/16, B01D 3/20, B01D 3/30

(54) **VENTIL ZUR DURCHFÜHRUNG EINES STOFFAUSTAUSCHPROZESSES**
VALVE FOR CONTROLLING A MATERIAL EXCHANGE PROCESS
SOUPAPE DESTINÉE À L'EXÉCUTION D'UN PROCESSUS D'ÉCHANGE DE MATIÈRE

(30) Priorität: 11.03.2013 EP 13158632
(43) Veröffentlichungstag der Anmeldung: 20.01.2016
(73) Patentinhaber: BASF SE, 67056 Ludwigshafen am Rhein (DE)
(72) Erfinder: GIESE, Reiner, 67814 Dannenfels (DE); HÄDICKE, Stefan, 67240 Bobenheim-Roxheim (DE); SCHMIDT, Egon, 66424 Homburg (DE)
(86) Internationale Anmeldenummer: PCT/EP2014/054365
(87) Internationale Veröffentlichungsnummer: WO 2014/139859

(56) Entgegenhaltungen:
- EP-A1- 2 027 901
- EP-A1- 2 033 698
- US-A1- 2010 221 156

## Beschreibung

Die Erfindung geht aus von einem Ventil zur Durchführung eines Stoffaustauschprozesses, bei dem auf einem oberen Boden stehenden Flüssigkeit von einem Gas durchströmt, bei Unterbrechung der Gaszufuhr die Flüssigkeit in eine Schleuse unterhalb des oberen Bodens fließt und bei erneutem Starten der Gaszufuhr die Flüssigkeit aus der Schleuse durch einen die Schleuse nach unten begrenzenden unteren Boden ausfließt, wobei das Ventil ein Schließelement umfasst, das eine Kolbenstange, einen oberen Ventilteller und einen unteren Ventilteller umfasst und das in einer Hülse geführt ist, wobei der untere Ventilteller in einer ersten Ventilposition eine Öffnung am unteren Ende der Hülse verschließt.

Ein Ventil zur Durchführung eines Stoffaustauschprozesses, das in einem einen oberen und einen unteren Boden umfassenden Trennboden aufgenommen ist, wobei zwischen dem oberen Boden und dem unteren Boden eine Schleuse ausgebildet ist, wobei das Ventil so ausgeführt ist, dass in einer Ventilstellung Gas durch den Trennboden durchströmen kann und durch eine auf dem oberen Boden stehende Flüssigkeit geleitet wird und bei Unterbrechung der Gaszufuhr das Ventil in einer zweiten Ventilstellung dafür sorgt, dass die Flüssigkeit vom oberen Boden in die Schleuse einfließen kann, ist zum Beispiel aus EP 2 033 698 A1, EP 2 027 901 A1 oder RU 2 237 508 C1 bekannt. Die in diesen Dokumenten offenbarten Ventile umfassen jeweils ein Schließelement, das zwei Ventilteller umfasst, die mit einem Distanzsteg miteinander verbunden sind. In einer ersten Stellung des Schließelements wird mit dem unteren Ventilteller eine Auslauföffnung aus dem Ventil verschlossen, durch die Flüssigkeit vom unteren Boden auf den darunterliegenden Trennboden ausströmen kann. Gleichzeitig befindet sich der zweite Ventilteller in einer Position, die ein Strömen der Flüssigkeit vom oberen Boden in die Schleuse erlaubt. In einer zweiten Ventilstellung wird das Schließelement angehoben, so dass Gas durch die untere Öffnung im Ventil zunächst in die Schleuse einströmen kann und dann um den unteren Ventilteller durch Öffnungen im Ventilgehäuse durch die Schleuse in Richtung des oberen Bodens strömen kann, wobei das Gas auf dem oberen Boden durch die auf dem Boden stehende Flüssigkeit geleitet wird.

Nachteil des aus dem Stand der Technik bekannten Ventils ist jedoch, dass diese blockieren können, so dass die Flüssigkeit aus der Schleuse bei erneuter Gaszufuhr nicht ausströmt oder ein zu großer Gasdruck notwendig ist, um das Ventil zu öffnen. Dies kann zu einer Verschlechterung der Trennleistung führen.

Aufgabe der vorliegenden Erfindung ist es daher, Ventile zur Durchführung eines Stoffaustauschprozesses bereitzustellen, die ausfallsicher funktionieren, so dass die Ventile nicht verkanten können und hierdurch blockieren können.

Gelöst wird die Aufgabe durch ein Ventil zur Durchführung eines Stoffaustauschprozesses, bei dem auf einem oberen Boden stehende Flüssigkeit von einem Gas durchströmt, bei Unterbrechung der Gaszufuhr die Flüssigkeit in eine Schleuse unterhalb des oberen Bodens fließt und bei erneutem Starten der Gaszufuhr die Flüssigkeit aus der Schleuse durch einen die Schleuse nach unten begrenzenden unteren Boden ausfließt, wobei das Ventil ein Schließelement umfasst, das eine Kolbenstange, einen oberen Ventilteller und einen unteren Ventilteller umfasst und das in einer Hülse geführt ist, wobei der unteren Ventilteller in einer ersten Ventilposition eine Öffnung am unteren Ende der Hülse verschließt. Erfindungsgemäß sind der obere Ventilteller und der unteren Ventilteller jeweils beweglich mit der Kolbenstange verbunden.

Durch die bewegliche Verbindung der Ventilteller mit der Kolbenstange wird eine dauerhafte Funktionssicherheit des Ventils gewährleistet. Die bewegliche Verbindung der Ventilteller mit der Kolbenstange verhindert ein Verkanten bzw. Verklemmen und gewährleistet dadurch ein dichtes und sicheres Schließen dauerhaft im Betrieb. Durch die bewegliche Verbindung ergibt sich zudem eine automatische Zentrierung im Ventilgehäuse.

Die bewegliche Verbindung des oberen Ventiltellers und des unteren Ventiltellers mit der Kolbenstange wird zum Beispiel durch eine Befestigung des oberen Ventiltellers und des unteren Ventiltellers mit Klemmlaschen an der Kolbenstange erzielt. Die Befestigung mittels Klemmlaschen erlaubt eine leicht zu realisierende Verbindung von Ventilteller und Kolbenstange ohne Einsatz von komplexen Bauteilen.

In einer Ausführungsform der Erfindung ist das Ventil so gestaltet, dass ein oberer Anschlag umfasst ist, gegen den der obere Ventilteller in einer zweiten Ventilstellung anschlägt, wobei der obere Anschlag unterhalb des oberen Endes der Hülse ausgebildet ist. Der obere Anschlag dient zum einen dazu, dass bei einer Gasströmung durch das Ventil das die beiden Ventilteller und die Kolbenstange umfassende Schließelement nicht nach oben aus der Hülse herausgedrückt wird. Die Anordnung des oberen Anschlags unterhalb des oberen Endes der Hülse ermöglicht weiterhin einen Einbau des Ventils dergestalt, dass der obere Boden bündig mit der Hülse abschließt, so dass bei einer Ventilstellung, bei der das Schließelement in der unteren Position ist, die gesamte Flüssigkeit vom oberen Boden in die Schleuse abfließen kann.

Um einen Gasdurchtritt zu ermöglichen, sind in der Ausführungsform, bei der der obere Anschlag unterhalb des oberen Endes der Hülse ausgebildet ist, in einer Ausführungsform oberhalb des oberen Anschlags Ausströmöffnungen ausgebildet und unterhalb des oberen Anschlags Überströmöffnungen. Die Ausströmöffnungen und Überströmöffnungen sind weiterhin von einer Überströmkammer umschlossen, so dass in der zweiten Ventilstellung Gas durch die Überströmöffnungen unterhalb des oberen Anschlags aus dem Ventil in die Überströmkammer eintreten kann und durch die Ausströmöffnungen aus der Überströmkammer in die Flüssigkeit oberhalb des oberen Bodens ausströmen kann. Das Gas umströmt somit im Betrieb den oberen Ventilteller.

In einer besonders bevorzugten Ausführungsform sind die Überströmöffnungen so ausgebildet, dass diese mit ihrem oberen Rand bündig mit dem oberen Anschlag abschließen. Diese Anordnung der Überströmöffnungen führt dazu, dass sich der obere Ventilteller an seine durch den oberen Anschlag gebildete Dichtfläche ansaugt, was zu einer wesentlichen Schließkrafterhöhung führt.

In einer alternativen Ausführungsform ist der obere Anschlag am oberen Ende der Hülse ausgebildet und die Hülse so im oberen Boden positioniert, dass diese durch den oberen Boden hinausragt. In dieser Ausgestaltung sind unterhalb des oberen Anschlags in der Hülse Öffnungen ausgeführt, die oberhalb des oberen Bodens positioniert sind. Um ein vollständiges Ablaufen der Flüssigkeit vom oberen Boden zu ermöglichen ist es weiterhin bevorzugt, wenn der untere Rand der Öffnungen bündig mit dem oberen Boden abschließt. Wenn sich das Schließelement in der ersten, unteren Ventilstellung befindet, kann dann die Flüssigkeit, die unterhalb des oberen Endes der Hülse auf dem oberen Boden steht, durch die Öffnungen in die Schleuse ablaufen.

In einer bevorzugten Ausführungsform ist an der Hülse ein oberer Montagering ausgebildet, auf dem nach Montage von Ventilen und Böden der obere Boden aufliegt. Durch den Montagering wird der Boden an der richtigen Stellung in Bezug zum Ventil positioniert. Bei einem Ventil, bei dem die Hülse über den oberen Boden hinausragt, wird der Montagering dabei so angebracht, dass die Öffnungen, durch die die Flüssigkeit ausströmen kann, oberhalb des Montagerings und damit oberhalb des oberen Bodens liegen. Hierbei ist es möglich, die Öffnungen in der Hülse so zu gestalten, dass diese so oberhalb des Montagerings enden, dass der untere Rand der Öffnung unterhalb der oberen Fläche des oberen Bodens liegt, so dass effektiv die untere Begrenzung der Öffnungen durch den Boden gebildet wird.

Wenn das Ventil so gestaltet ist, dass ein Überströmkanal vorgesehen ist und die Ventilhülse bündig mit dem oberen Boden enden soll, ist es besonders vorteilhaft, den oberen Montagering einteilig mit der Wandung des Überströmkanals auszubilden. In diesem Fall liegt der obere Boden dann auf der Wandung des Überströmkanals auf.

Vorteilhaft ist es weiterhin, wenn an der Hülse auch ein unter Montagering ausgebildet ist, der nach Montage auf dem unteren Boden aufliegt. Dies ermöglicht es, den unteren Boden, die Ventile und den oberen Boden allein durch Aufeinanderlegen bzw. Stecken miteinander zu verbinden, so dass keine zusätzlichen Befestigungsmittel, beispielsweise Schrauben oder Nieten zum Befestigen von Böden und Ventilen oder eine Verbindung durch Verschweißen notwendig sind. Dies ermöglicht es, für Böden, Ventile und weitere Bauteile jeweils geeignete Werkstoffe einzusetzen. So können zum Beispiel unterschiedliche Materialien für unterschiedliche Beanspruchungen wie Ventilteller und Hülse verwendet werden. Um die Böden und die Ventile definiert zueinander zu positionieren ist es weiterhin vorteilhaft, wenn am oberen Montagering und/oder am unteren Montagering Steckverbinder ausgebildet sind, so dass das Ventil durch eine Steckverbindung mit dem oberen Boden und/oder dem unteren Boden verbunden wird. Die Steckverbindung sorgt insbesondere dafür, dass sich das Ventil in Relation zum Boden nicht verschieben kann.

Alternativ zum unteren Montagering ist es besonders bevorzugt, wenn an der Hülse Aufliegenasen ausgebildet sind, die nach Montage des Ventils auf dem unteren Boden aufliegen. Der Einsatz von Aufliegenasen anstelle des unteren Montagerings erlaubt es, dass die gesamte Flüssigkeit aus der Schleuse in das Ventil einströmen kann, um so aus der Schleuse durch das Ventil auf den darunterliegenden Boden ausströmen zu können. Wenn ein Montagering verwendet wird, so liegt dieser auf dem unteren Boden auf und verhindert, dass Flüssigkeit bis zu einer Höhe des Montagerings aus der Schleuse ablaufen kann.

Durch die Möglichkeit, den oberen Boden, den unteren Boden und die dazwischenliegenden Ventile durch eine Steckverbindung miteinander zu verbinden, sind die Eigenschaften der jeweiligen Einzelbauteile auch am fertigen Bauteil vorhanden. Insbesondere werden die maßlichen und korrosionsbeständigen Eigenschaften nicht verändert.

Die Herstellung der einzelnen Bauteile des Ventils erfolgt vorzugsweise durch eine Laser-Schneidtechnik oder Wasserstrahl-Schneidtechnik. Hierdurch kann auf ein thermisches oder mechanisches Schneidverfahren verzichtet werden, wodurch sich die einzelnen Bauteile verformen können. Zudem wird durch das Laser-Schneidverfahren bzw. Wasserstrahl-Schneidverfahren die Einzelbauteil-Fertigungsgenauigkeit deutlich erhöht und es können Maßungenauigkeiten weitestgehend vermieden werden. Zudem sind Bauteile, die durch Laser-Schneidtechnik oder Wasserstrahl-Schneidtechnik hergestellt werden, wesentlich korrosionsbeständiger, da diese Teile nicht thermisch vorbelastet worden sind.

Um ein Verkanten und Verklemmen des Schließelementes zu vermeiden und damit ein dichtes und sicheres Schließen dauerhaft in Betrieb zu erhalten ist es weiterhin insbesondere bevorzugt, wenn der obere Ventilteller einen sich nach unten erstreckenden Rand aufweist. Der untere Ventilteller ist vorzugsweise flach ausgeformt und weist keinen entsprechenden sich nach unten oder oben erstreckenden Rand auf.

Im laufenden Betrieb strömt Gas durch eine untere Öffnung in die Hülse ein und drückt so auf den unteren Ventilteller. Hierdurch wird das Schließelement angehoben. Oberhalb des unteren Bodens befinden sich in der Hülse Öffnungen, durch die das Gas in die Schleuse eintreten kann. Aufgrund des dadurch entstehenden Druckanstiegs in der Schleuse tritt das Gas oberhalb des unteren Ventiltellers durch Öffnungen wieder in die Hülse ein. Hierbei ist es nicht notwendig, unterschiedliche Öffnungen zum Austritt und Eintritt des Gases vorzusehen, sondern es ist möglich, beispielsweise schlitzförmige Öffnungen auszubilden, wobei eine Trennung zwischen Austritt des Gases und Eintritt des Gases durch den unteren Ventilteller realisiert wird. Neben der Ausbildung von Öffnungen in Form von Schlitzen ist es auch möglich, die Hülse in jeder beliebigen anderen Art zu perforieren, beispielsweise durch einzelne kreisförmige runde Öffnungen, die sich über den Umfang der Hülse verteilen.

Durch das in die Hülse eintretende Gas wirkt eine Kraft auf den oberen Ventilteller, so dass die Kraft, die das Schließelement nach oben hebt, hierdurch weiter unterstützt wird. Durch die durch das Gas ausgeübte Kraft wird das Schließelement gegen den oberen Anschlag gedrückt. Das Gas tritt dann durch die Austrittsöffnungen im oberen Bereich der Hülse in die Flüssigkeit auf dem oberen Boden aus.

Bei Unterbrechung der Gaszufuhr wirkt keine Kraft mehr auf das Schließelement, so dass dies innerhalb der Hülse nach unten auf einen unteren Anschlag am unteren Ende der Hülse fällt. Hierbei kommt der untere Ventilteller auf dem unteren Anschlag zum Aufliegen. Die Flüssigkeit strömt nun durch die Hülse in die Schleuse. Nach einer vorgegebenen Zeit, wenn die gesamte Flüssigkeit von allen Böden der Kolonne in die jeweiligen Schleusen eingelaufen ist, wird die Gaszufuhr erneut gestartet. Hierdurch wirkt wieder eine Kraft auf das Schließelement und dieses wird nach oben gehoben. Die Flüssigkeit kann nun entgegen der Gasströmung durch die untere Öffnung der Hülse aus der Schleuse auf den darunterliegenden Trennboden auslaufen.

Ausführungsbeispiele der Erfindung sind in den Figuren dargestellt und werden in der nachfolgenden Beschreibung näher erläutert.

Es zeigen:
- Figur 1: das erfindungsgemäße Ventil mit Überstromkanal während des Stoffaustauschprozesses,
- Figur 2: das erfindungsgemäße Ventil mit Schließelement in einer unteren Ventilposition bei Unterbrechung der Gaszufuhr,
- Figur 3: das erfindungsgemäße Ventil bei erneutem Start der Gaszufuhr,
- Figur 4: den Ablauf der Flüssigkeit aus der Schleuse nach Beginn der erneuten Gaszufuhr,
- Figur 5: eine Draufsicht auf ein erfindungsgemäßes Ventil mit Steckverbindern am oberen Montagering,
- Figur 6: Aufliegenasen an der Hülse zur Ventilmontage,
- Figur 7: ein erfindungsgemäßes Ventil in einer zweiten Ausführungsform.

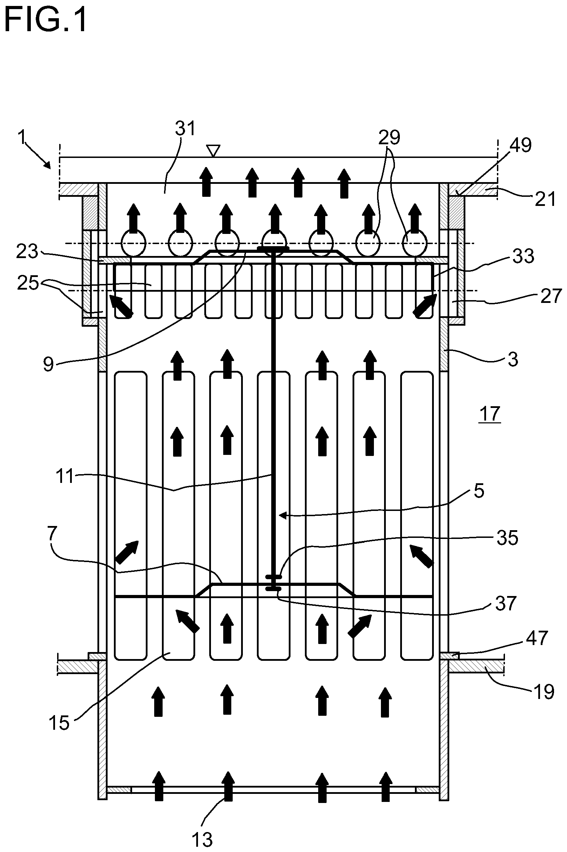

Figur 1 zeigt ein erfindungsgemäßes Ventil mit Überströmkanal während des Stoffaustauschprozesses.

Ein Ventil 1 umfasst eine Hülse 3, in der ein Schließelement 5 beweglich aufgenommen ist. Das Schließelement 5 ist aufgebaut aus einem unteren Ventilteller 7, einem oberen Ventilteller 9 und einer Kolbenstange 11, mit der der untere Ventilteller 7 und der obere Ventilteller 9 miteinander verbunden sind.

Die Hülse 3 ist an ihrem unteren Ende offen, so dass während des Stoffaustauschprozesses Gas in die Hülse 3 einströmen kann. Dies ist in Figur 1 mit Pfeilen 13 dargestellt. Das einströmende Gas 13 drückt auf den unteren Ventilteller 7, wodurch das Schließelement 5 angehoben wird.

Durch Öffnungen 15 tritt das Gas aus der Hülse 3 in eine Schleuse 17 ein. Die Schleuse 17 wird dabei durch einen unteren Boden 19 und einen oberen Boden 21 begrenzt. Hierbei ist das Ventil 1 in der in Figur 1 dargestellten Ausführungsform so ausgebildet, dass die Hülse 3 aus dem unteren Boden 19 nach unten herausragt und bündig mit dem oberen Boden 21 abschließt.

Die Öffnungen 15 können, wie in Figur 1 dargestellt, schlitzförmig ausgebildet sein. Neben einer schlitzförmigen Gestalt der Öffnungen 15 ist auch jede beliebige andere Ausführung der Öffnungen 15 möglich. So ist es zum Beispiel auch möglich, die Hülse im Bereich der Schleuse 17 zu perforieren.

Durch das einströmende Gas steigt der Druck in der Schleuse 17 leicht an, so dass Gas oberhalb des unteren Ventiltellers 7 durch die Öffnungen 15 wieder in die Hülse 3 eintritt. Das in die Hülse 3 wieder eintretende Gas wirkt dabei auf den oberen Ventilteller 9 und unterstützt so das Anheben des Schließelements 5. Damit das Schließelement 5 nicht aus der Hülse 3 gehoben wird, ist in der Hülse 3 ein oberer Anschlag 23 aufgenommen, gegen den das Schließelement 5 gepresst wird. Unterhalb des oberen Anschlags 23 befinden sich Überströmöffnungen 25, durch die das Gas in einen Überströmkanal 27 einströmt, in diesem umgelenkt wird und durch Ausströmöffnungen 29 in eine Flüssigkeit, die auf dem oberen Boden 21 steht, einströmt. Die Überströmöffnungen 25 und der Überströmkanal 27 befinden sich dabei oberhalb der Öffnungen 15. Um Verkantungen des Schließelements 5 in der Hülse 3 zu vermeiden, sind der untere Ventilteller 7 und der obere Ventilteller 9 in einem Durchmesser ausgeführt, der kleiner ist als der Innendurchmesser der Hülse 3. Zudem weist der obere Ventilteller 9 in einer besonders bevorzugten Ausführungsform, die in Figur 1 dargestellt ist, einen sich nach unten erstreckenden Rand 33 auf. Hierbei ist die Höhe des sich nach unten erstreckenden Randes 33 so gewählt, dass bei einer Position des oberen Ventiltellers 9 am oberen Anschlag 23 noch zumindest ein Teil der Überströmöffnungen 25 nicht durch den sich nach unten erstreckenden Rand 33 verdeckt wird.

Weiterhin sind der untere Ventilteller 7 und der obere Ventilteller 9 beweglich mit der Kolbenstange 11 verbunden. Hierzu ist es zum Beispiel möglich, wie in Figur 1 am unteren Ventilteller 7 schematisch gezeigt, an der Kolbenstange 11 einen Anschlag 35 auszubilden, der oberhalb des unteren Endes der Kolbenstange 11 positioniert ist. Unterhalb des Anschlags 35 befindet sich dann der untere Ventilteller 7 und mit einem weiteren Anschlag 37 am Ende der Kolbenstange wird der untere Ventilteller 7 fixiert. Hierbei ist der Abstand zwischen dem Anschlag 35 und dem weiteren Anschlag 37 größer als die Dicke des unteren Ventiltellers 7, und zudem ist im unteren Ventilteller 7 eine Öffnung aufgenommen, deren Durchmesser größer ist als der Durchmesser der Kolbenstange 11. Hierdurch kann sich der untere Ventilteller 7 auf der Kolbenstange 11 bewegen. Der obere Ventilteller 9 wird vorzugsweise auf die gleiche Weise mit der Kolbenstange 11 verbunden. Der Anschlag 35 kann zum Beispiel dadurch gebildet werden, dass auf die Kolbenstange 11 ein Ring aufgesetzt wird. Alternativ ist es auch möglich, die Kolbenstange 11 zum Beispiel zu stauchen, um einen entsprechenden Anschlag auszubilden. Der Anschlag 35 weist dabei einen Durchmesser auf, der größer ist als der Durchmesser der Öffnung in dem unteren Ventilteller 7, durch den die Kolbenstange 11 geschoben ist. Der weitere Anschlag 37, mit dem der untere Ventilteller 7 fixiert wird, kann zum Beispiel durch Klemmlaschen gebildet werden.

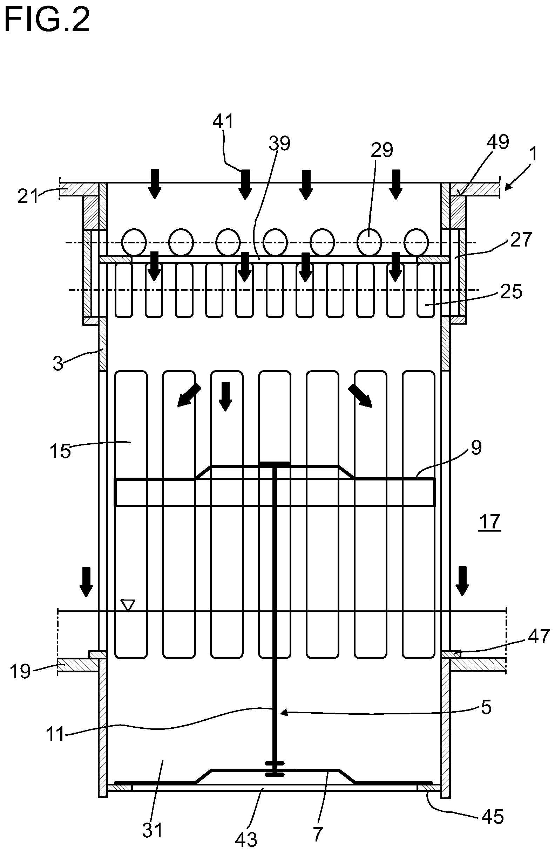

Bei Unterbrechung der Gaszufuhr, d.h. bei Unterbrechung des Stoffaustauschprozesses, wirkt aufgrund der fehlenden Gasströmung keine Kraft mehr auf das Schließelement 5, so dass dieses in eine zweite, untere Ventilstellung fällt. Dies ist in Figur 2 dargestellt. Durch die fehlende Gasströmung und die Position des Schließelements 5 in der unteren Ventilstellung wird zum einen eine obere Öffnung 39 in der Hülse 3 freigegeben und zum anderen die Strömung der Flüssigkeit durch die Ausströmöffnung 29, den Überströmkanal 27 und die Überströmöffnung 25 nicht mehr blockiert. Dies führt dazu, dass die Flüssigkeit vom oberen Boden 21, wie mit den Pfeilen 41 dargestellt, in die Schleuse 17 fließt. Am oberen Ventilteller 9 wird die Flüssigkeit umgeleitet und durch die Öffnungen 15 oberhalb des oberen Ventiltellers 9 in die Schleuse geleitet. Unterhalb des oberen Ventiltellers 9 strömt die Flüssigkeit dann auch wieder in die Hülse 3 ein. Durch den unteren Ventilteller 7, mit dem die untere Öffnung 43 in der Hülse 3 verschlossen wird, wird ein Ausströmen der Flüssigkeit 31 aus der Schleuse 17 verhindert. Um die Schleuse abzudichten, liegt der untere Ventilteller 7 hierzu auf einem unteren Anschlag 45 auf.

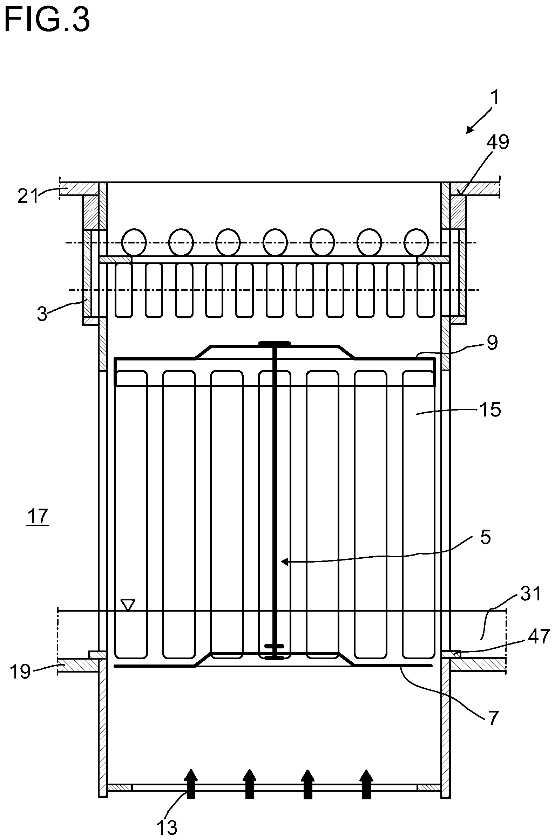

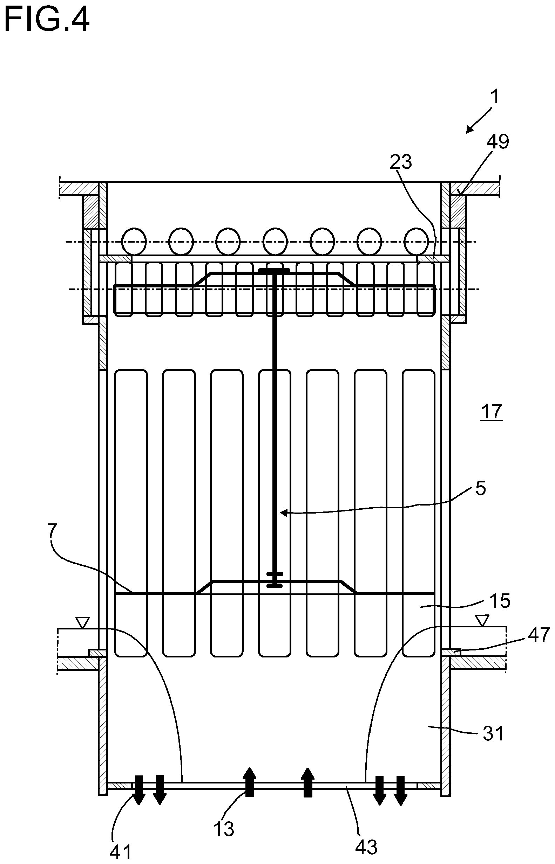

Im laufenden Betrieb wird nach dem Einströmen der Flüssigkeit in die Schleuse 17 von sämtlichen Trennböden die Gaszufuhr wieder gestartet. Durch die startende Gaszufuhr beginnt sich das Schließelement 5 innerhalb der Hülse 3 zu heben. Dies ist beispielhaft in Figur 3 dargestellt. Hierzu wird zunächst das Schließelement 5 mit der auf dem unteren Ventilteller 7 stehenden Flüssigkeit 31 angehoben. Durch den Spalt zwischen unterem Ventilteller 7 und Hülse 3 kann ein kleiner Teil der Flüssigkeit strömen. Die Gasströmung führt weiterhin dazu, dass das Schließelement 5 weiter angehoben wird, wie dies in Figur 4 dargestellt ist. Durch das weitere Anheben des Schließelements 5 werden die Öffnungen 15 unterhalb des unteren Ventiltellers 7 freigegeben, so dass die Flüssigkeit 31 ungehindert aus der Schleuse 17 ausströmen kann. Gleichzeitig strömt Gas im Gegenstrom zur Flüssigkeit durch die untere Öffnung 43 in die Hülse ein, wodurch das Schließelement 5 weiter angehoben wird, bis dieses an den oberen Anschlag 23 anschlägt, wie dies in Figur 1 dargestellt ist.

Im laufenden Betrieb wird nach einer vorgegebenen Zeit die Gasströmung wieder unterbrochen, so dass die Flüssigkeit in die Schleuse einströmen kann und danach die gesamte Flüssigkeit jeweils auf den darunterliegenden Trennboden strömt. Durch dieses Verfahren wird erzielt, dass nicht kontinuierlich ein Teil der Flüssigkeit von einem Boden auf den darunterliegenden Boden strömt, so dass es nicht zu einer Durchmischung der Flüssigkeit innerhalb der Kolonne für den Stoffaustausch kommt.

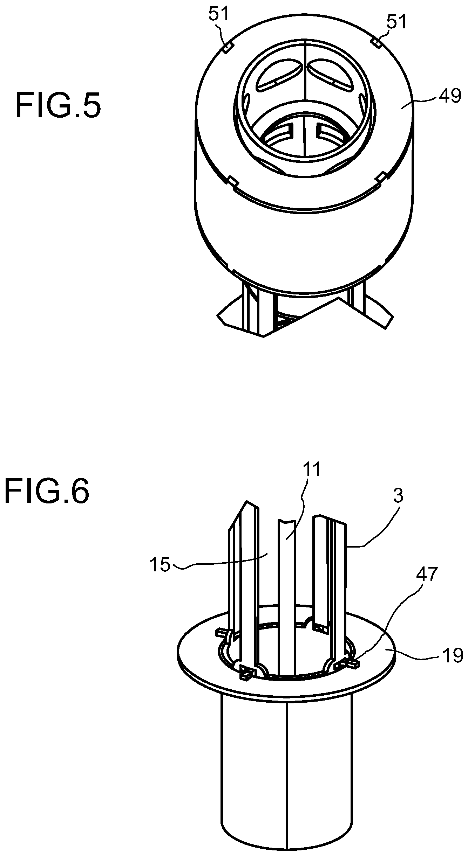

In Figur 5 ist eine Draufsicht auf ein erfindungsgemäßes Ventil gezeigt. Um eine möglichst einfache Montage zu erhalten, weist das Ventil 1 Auflageelemente 47, wie in den Figuren 1 bis 4 dargestellt, auf. Das Auflageelement 47 kann zum Beispiel ein Ring, ein Ringsegment oder eine Aufliegenase sein. Mit dem Auflageelement 47 liegt das Ventil auf dem unteren Boden 19 auf. Am oberen Ende der Hülse 3 befindet sich ein oberer Montagering 49, die in der in den Figuren 1 bis 4 dargestellten Ausführungsform durch den oberen Abschluss des Überströmkanals 27 gebildet wird. Auf dem oberen Montagering 49 liegt der obere Boden 21 auf.

Um ein Verdrehen und Verschieben des Ventils 1 in der Schleuse zu verhindern und eine stabile Verbindung des Ventils 1 mit dem oberen Boden 21 zu erhalten, sind vorzugsweise an dem oberen Montagering 49 Steckverbinder 51 ausgebildet. Die Steckverbinder 51 greifen dabei in entsprechende Gegenelemente am oberen Boden 21 ein. Hierdurch wird eine stabile Verbindung der Hülse 3 mit dem oberen Boden 21 erhalten. Alternativ ist es auch möglich, die Steckverbinder am oberen Boden 21 auszubilden und die entsprechenden Gegenverbinder, beispielsweise Rastöffnungen, in dem oberen Montagering 49 auszubilden.

Um ein vollständiges Ausströmen der Flüssigkeit aus der Schleuse 17 zu ermöglichen, ist es bevorzugt, die Auflageelemente 47 in Form von Aufliegenasen zu gestaltet, wie dies in Figur 6 dargestellt ist. Durch die Gestaltung als Aufliegenase werden die Öffnungen 15 in der Hülse 3 nicht zumindest teilweise abgedeckt. Die Öffnungen können bis an den unteren Boden 19 reichen, so dass die gesamte Flüssigkeit vom unteren Boden 19 in die Hülse 3 strömen kann.

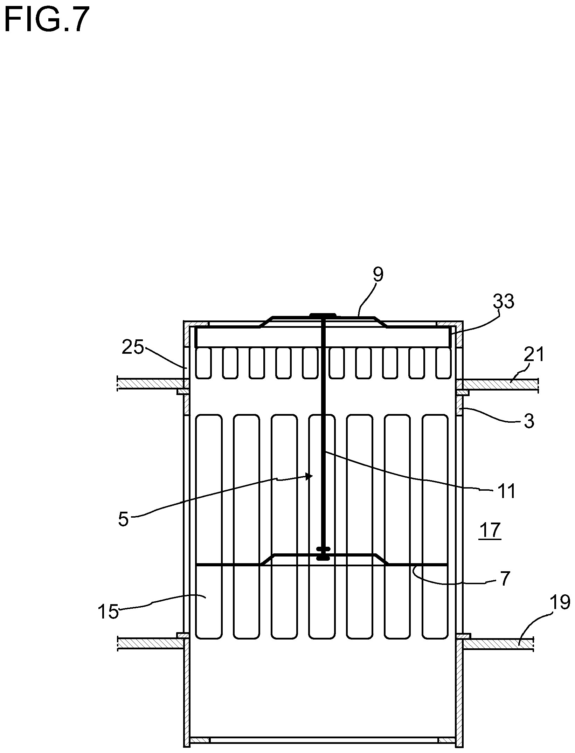

Neben der in den Figuren 1 bis 4 dargestellten Ausführungsform mit einem Überströmkanal 27 ist es auch möglich, die Hülse so zu gestaltet, dass diese über den oberen Boden 21 hinausragt. Dies ist beispielhaft in Figur 7 dargestellt.

Bei der in Figur 7 dargestellten Ausführungsform ist die Hülse so gestaltet, dass diese über den oberen Boden 21 so weit hinausragt, dass die Überströmöffnungen 25 oberhalb des oberen Bodens 21 positioniert sind. Das Gas kann somit direkt durch die Überströmöffnungen 25 in die Flüssigkeit auf dem oberen Boden 21 strömen. Beim Beenden der Gasströmung und der Stellung des Schließelements 5 in der zweiten, unteren Ventilposition kann die Flüssigkeit dann durch die Überströmöffnungen 25 vom oberen Boden 21 zunächst in die Hülse 3 und dann durch die Öffnungen 15 in die Schleuse 17 einströmen. Die Überströmöffnungen 25 sind dabei vorzugsweise so gestaltet, dass deren untere Kante flächenbündig mit dem oberen Boden 21 abschließt, so dass die gesamte Flüssigkeit vom oberen Boden 21 in die Hülse 3 einströmen kann.

Erfindungsgemäß ist der obere Ventilteller 9 auch bei der in Figur 7 dargestellten Ausführungsform mit einem sich nach unten erstreckenden Rand 33 ausgebildet und der untere Ventilteller 7 und der obere Ventilteller 9 sind beweglich mit der Kolbenstange 11 verbunden.

### Bezugszeichenliste

- 1: Ventil
- 3: Hülse
- 5: Schließelement
- 7: unterer Ventilteller
- 9: oberer Ventilteller
- 11: Kolbenstange
- 13: Gasströmung
- 15: Öffnung
- 17: Schleuse
- 19: unterer Boden
- 21: oberer Boden
- 23: oberer Anschlag
- 25: Überströmöffnung
- 27: Überströmkanal
- 29: Ausströmöffnung
- 31: Flüssigkeit
- 33: sich nach unten erstreckender Rand
- 35: Anschlag
- 37: weiterer Anschlag
- 39: obere Öffnung
- 41: Flüssigkeitsströmung
- 43: untere Öffnung
- 45: unterer Anschlag
- 47: Auflageelement
- 49: oberer Montagering
- 51: Steckverbinder

## Patentansprüche

1. Ventil zur Durchführung eines Stoffaustauschprozesses, bei dem auf einem oberen Boden (21) stehende Flüssigkeit (31) von einem Gas (13) durchströmt, bei Unterbrechung der Gaszufuhr die Flüssigkeit (31) in eine Schleuse (17) unterhalb des oberen Bodens (21) fließt und bei erneutem Starten der Gaszufuhr die Flüssigkeit (31) aus der Schleuse (17) durch einen die Schleuse (17) nach unten begrenzenden unteren Boden (19) ausfließt, wobei das Ventil (1) ein Schließelement (5) umfasst, das eine Kolbenstange (11) einen oberen Ventilteller (9) und einen unteren Ventilteller (7) umfasst und das in einer Hülse (3) geführt ist, wobei in der Hülse (3) oberhalb des unteren Bodens (19) Öffnungen (15) ausgebildet sind, durch die das Gas (13) in die Schleuse (17) eintreten kann und im oberen Bereich Austrittsöffnungen (29) ausgebildet sind, durch die das Gas in die Flüssigkeit auf dem oberen Boden (21) austritt und wobei der untere Ventilteller (7) in einer ersten Ventilstellung eine Öffnung (43) am unteren Ende der Hülse (3) verschließt, **dadurch gekennzeichnet, dass** der obere Ventilteller (9) und der untere Ventilteller (7) jeweils beweglich mit der Kolbenstange (11) verbunden sind, um ein Verkanten beziehungsweise Verklemmen zu verhindern.

2. Ventil gemäß Anspruch 1, **dadurch gekennzeichnet, dass** der obere Ventilteller (9) und der untere Ventilteller (7) mit Klemmlaschen an der Kolbenstange (11) befestigt sind.

3. Ventil gemäß Anspruch 1 oder 2, **dadurch gekennzeichnet, dass** ein oberer Anschlag (23) umfasst ist, gegen den der obere Ventilteller (9) in einer zweiten Ventilstellung anschlägt, wobei der obere Anschlag (23) unterhalb des oberen Endes der Hülse (3) angeordnet ist.

4. Ventil gemäß Anspruch 3, **dadurch gekennzeichnet, dass** oberhalb des oberen Anschlags (23) Ausströmöffnungen (29) und unterhalb des oberen Anschlags (3) Überströmöffnungen (25) in der Hülse (3) ausgebildet sind, wobei die Ausströmöffnungen (29) oberhalb des oberen Anschlags (23) und die Überströmöffnungen (25) unterhalb des oberen Anschlags (23) von einem Überströmkanal (27) umschlossen sind, so dass in der zweiten Ventilstellung Gas durch die Überströmöffnungen (25) unterhalb des oberen Anschlags (23) aus dem Ventil (1) in den Überströmkanal (25) und aus dem Überströmkanal (25) durch die Ausströmöffnungen (29) oberhalb des oberen Anschlags (23) ausströmen kann.

5. Ventil gemäß Anspruch 3 oder 4, **dadurch gekennzeichnet, dass** die Ausströmöffnungen (29) in der Hülse (3) mit einer unteren Begrenzung bündig mit dem oberen Anschlag (23) abschließen.

6. Ventil gemäß Anspruch 1 oder 2, **dadurch gekennzeichnet, dass** am oberen Ende der Hülse (3) ein oberer Anschlag ausgebildet ist, gegen den der obere Ventilteller (9) in einer
geänderte Blätter
zweiten Ventilposition anschlägt, und unterhalb des oberen Anschlags Öffnungen (25) in der Hülse (3) ausgebildet sind, wobei die Öffnungen (25) so dimensioniert sind, dass diese nach Montage des Ventils (1) oberhalb des oberen Bodens (21) positioniert sind.

7. Ventil gemäß einem der Ansprüche 1 bis 6, **dadurch gekennzeichnet, dass** an der Hülse (3) ein oberer Montagering (49) ausgebildet ist auf dem nach Montage der obere Boden (21) aufliegt.

8. Ventil gemäß einem der Ansprüche 1 bis 7, **dadurch gekennzeichnet, dass** an der Hülse (3) ein unterer Montagering (47) ausgebildet ist, der nach Montage auf dem unteren Boden (19) aufliegt.

9. Ventil gemäß Anspruch 7 oder 8, **dadurch gekennzeichnet, dass** am oberen Montagering (49) und/oder am unteren Montagering (47) Steckverbinder (51) ausgebildet sind, so dass das Ventil (1) durch eine Steckverbindung mit dem oberen Boden (21) und/oder unteren Boden (19) verbunden wird.

10. Ventil gemäß einem der Ansprüche 1 bis 7 oder 9, **dadurch gekennzeichnet, dass** an der Hülse Aufliegenasen (47) ausgebildet sind, die nach Montage des Ventils (1) auf dem unteren Boden (19) aufliegen.

11. Ventil gemäß einem der Ansprüche 1 bis 10, **dadurch gekennzeichnet, dass** der obere Ventilteller (9) einen sich nach unten erstreckenden Rand (33) aufweist.

12. Ventil gemäß einem der Ansprüche 1 bis 11, **dadurch gekennzeichnet, dass** der untere Ventilteller (7) flach ausgebildet ist.

13. Ventil gemäß einem der Ansprüche 1 bis 12, **dadurch gekennzeichnet, dass** die Hülse (3) mit den darin ausgebildeten Öffnungen (15, 25, 29), der obere Ventilteller (9), der untere Ventilteller (7) und/oder die Kolbenstange (11) zumindest teilweise durch Laserstrahl-Schneidtechnik oder durch Wasserstrahl-Schneidtechnik gefertigt werden.

## Claims

1. A valve for carrying out a mass-transfer process in which a gas (13) flows through a liquid (31) standing on an upper tray (21), when the gas supply is interrupted the liquid (31) flows into a lock (17) beneath the upper tray (21) and, when the gas supply is restarted, the liquid (31) flows out of the lock (17) through a lower tray (19) bordering the lock (17) downward, wherein the valve (1) comprises a closing element (5) which comprises a piston rod (11), an upper valve disk (9) and a lower valve disk (7), and which is conducted in a sleeve (3), wherein, in the sleeve (3) above the lower tray (19), openings (15) are formed, through which openings the gas (13) can enter into the lock (17), and, in the upper region, outlet openings (29) are formed, through which outlet openings the gas exits into the liquid on the upper tray (21) and wherein the lower valve disk (7), in a first valve position, closes an opening (43) at the lower end of the sleeve (3), wherein the upper valve disk (9) and the lower valve disk (7) are each movably connected to the piston rod (11), in order to prevent a tilting or jamming.

2. The valve according to claim 1, wherein the upper valve disk (9) and the lower valve disk (7) are fastened by clamping brackets to the piston rod (11).

3. The valve according to claim 1 or 2, wherein an upper stop (23) is comprised, against which the upper valve disk (9) strikes in a second valve position, wherein the upper stop (23) is arranged below the upper end of the sleeve (3).

4. The valve according to claim 3, wherein, above the upper stop (23), outlet openings (29), and below the upper stop (3), overflow openings (25) are formed in the sleeve (3), wherein the outlet openings (29), above the upper stop (23), and the overflow openings (25), below the upper stop (23) are enclosed by an overflow channel (27) in such a manner that in the second valve position gas can flow through the overflow openings (25) below the upper stop (23) out of the valve (1) into the overflow channel (25), and can flow out of the overflow channel (25) through the outflow openings (29) above the upper stop (23).

5. The valve according to claim 3 or 4, wherein the outflow openings (29) in the sleeve (3) are sealed flush by a lower boundary to the upper stop (23).

6. The valve according to claim 1 or 2, wherein, at the upper end of the sleeve (3), an upper stop is formed, against which the upper valve disk (9) strikes in a second valve position, and below the upper stop, openings (25) in the sleeve (3) are formed, wherein the openings (25) are dimensioned in such a manner that, after assembly of the valve (1), they are positioned above the upper tray (21).

7. The valve according to any one of claims 1 to 6, wherein an upper mounting ring (49) is formed on the sleeve (3), on which mounting ring, after assembly, the upper tray (21) lies.

8. The valve according to any one of claims 1 to 7, wherein, on the sleeve (3), a lower mounting ring (47) is formed, which mounting ring, after assembly, lies on the lower tray (19).

9. The valve according to claim 7 or 8, wherein, on the upper mounting ring (49) and/or on the lower mounting ring (47), push-in connectors (51) are formed in such a manner that the valve (1) is connected via a push-in connection to the upper tray (21) and/or lower tray (19).

10. The valve according to any one of claims 1 to 7 or 9, wherein, rest lugs (47) are formed on the sleeve, which rest lugs, after assembly of the valve (1) lie on the lower tray (19).

11. The valve according to any one of claims 1 to 10, wherein the upper valve disk (9) has a downward-extending rim (3).

12. The valve according to any one of claims 1 to 11, wherein the lower valve disk (7) is formed so as to be flat.

13. The valve according to any one of claims 1 to 12, wherein the sleeve (3) together with the openings (15, 25, 29) formed therein, the upper valve disk (9), the lower valve disk (7) and/or the piston rod (11) are fabricated at least in part by laser cutting technology or by water jet cutting technology.

## Revendications

1. Soupape destinée à l'exécution d'un processus d'échange de matière, dans lequel le fluide (31) se trouvant sur un fond (21) supérieur est traversé par un gaz (13), lors de l'interruption de l'amenée de gaz, le fluide (31) s'écoulant dans un sas (17) placé en dessous du fond (21) et en cas de redémarrage de l'amenée de gaz, le fluide (31) s'écoulant hors du sas (17) à travers un fond (19) inférieur délimitant le sas (17) vers le bas, la soupape (1) comprenant un élément de fermeture (5) comprenant une tige de piston (11), un disque de soupape (9) supérieur et un disque de soupape (7) inférieur et étant guidée dans un fourreau (3), des ouvertures (15) à travers lesquelles le gaz (13) peut pénétrer dans le sas (17) étant réalisées dans le fourreau (3) au-dessus du fond (19) inférieur et des ouvertures de sortie (29) à travers lesquelles le gaz peut sortir dans le fluide sur le fond supérieur (21) étant réalisées dans la région supérieure et le disque de soupape (7) inférieur fermant, dans une première position de soupape, une ouverture (43) au niveau de l'extrémité inférieure du fourreau (3), **caractérisée en ce que** le disque de soupape (9) supérieur et le disque de soupape (7) inférieur sont respectivement reliés de façon mobile à la tige de piston (11) en vue d'empêcher un basculement et/ou un coincement.

2. Soupape selon la revendication 1, **caractérisée en ce que** le disque de soupape (9) supérieur et le disque de soupape (7) inférieur sont fixés à des brides de serrage au niveau de la tige de piston (11).

3. Soupape selon la revendication 1 ou 2, **caractérisée en ce qu'**une butée (23) supérieure est comprise contre laquelle le disque de soupape (9) supérieur bute dans une deuxième position de soupape, la butée supérieure (23) étant disposée en dessous de l'extrémité supérieure du fourreau (3).

4. Soupape selon la revendication 3, **caractérisée en ce que** des ouvertures d'évacuation (29) sont réalisées au-dessus de la butée (23) supérieure et que des ouvertures de trop-plein (25) sont réalisées en dessous de la butée (3) supérieure dans le fourreau (3), un canal de trop-plein (27) entourant les ouvertures d'évacuation (29) au-dessus la butée (23) supérieure et les ouvertures de trop-plein (25) en dessous de la butée (23) supérieure, de sorte que dans la deuxième position de soupape, le gaz traversant les ouvertures de trop-plein (25) peut être évacué hors de la soupape (1), dans le canal de trop-plein (25), en dessous de la butée (23) supérieure et hors du canal de trop-plein (25) à travers les ouvertures d'évacuation (29), au-dessus de la butée (23) supérieure.

5. Soupape selon la revendication 3 ou 4, **caractérisée en ce que** les ouvertures d'évacuation (29) se terminent dans le fourreau (3) par une délimitation inférieure en affleurement avec la butée (23) supérieure.

6. Soupape selon la revendication 1 ou 2, **caractérisée en ce qu'**une butée supérieure est réalisée au niveau de l'extrémité supérieure du fourreau (3), le disque de soupape (9) supérieur butant contre ladite butée dans une deuxième position de soupape et des ouvertures (25) étant réalisées dans le fourreau (3) en dessous de la butée supérieure, les ouvertures (25) étant dimensionnées de telle sorte qu'elles sont positionnées, après montage de la soupape (1), au-dessus du fond (21) supérieur.

7. Soupape selon l'une quelconque des revendications 1 à 6, **caractérisée en ce qu'**une bague de montage (49) supérieure sur laquelle le fond (21) supérieur repose après montage est réalisée au niveau du fourreau (3).

8. Soupape selon l'une quelconque des revendications 1 à 7, **caractérisée en ce qu'**une bague de montage (47) inférieure reposant après montage sur le fond (19) inférieur est réalisée au niveau du fourreau (3).

9. Soupape selon la revendication 7 ou 8, **caractérisée en ce que** des connecteurs enfichables (51) sont réalisés au niveau de la bague de montage (49) supérieure et/ou au niveau de la bague de montage (47) inférieure, de sorte que la soupape (1) soit reliée au fond supérieur (21) et/ou au fond inférieur (19) par l'intermédiaire d'une liaison par enfichage.

10. Soupape selon l'une quelconque des revendications 1 à 7 ou 9, **caractérisée en ce que** des becs d'appui (47) sont réalisés au niveau du fourreau, ces becs reposant après montage de la soupape (1) sur le fond (19) inférieur.

11. Soupape selon l'une quelconque des revendications 1 à 10, **caractérisée en ce que** le disque de soupape (9) supérieur comporte un rebord (33) s'étendant vers le bas.

12. Soupape selon l'une quelconque des revendications 1 à 11, **caractérisée en ce que** le disque de soupape (7) inférieur est réalisé de façon plate.

13. Soupape selon l'une quelconque des revendications 1 à 12, **caractérisée en ce que** le fourreau (3) avec les ouvertures (15, 25, 29) pratiquées dedans, le disque de soupape (9) supérieur, le disque de soupape (7) inférieur et/ou la tige de piston (11) sont fabriqués au moins en partie par le biais d'une technique de découpe au rayon laser ou d'une technique de découpe au jet d'eau.
